# EUROPEAN PATENT SPECIFICATION

(11) **EP 3 106 658 B1**
(45) Date of publication and mention of the grant of the patent: **29.11.2017**
(21) Application number: 15172558.7
(22) Date of filing: 17.06.2015
(51) Int. Cl.: F03D 80/00, F03D 1/06

(54) **OBJECT, IN PARTICULAR A ROTOR BLADE FOR A WIND TURBINE**
OBJEKT, INSBESONDERE EIN ROTORBLATT FÜR EINE WINDTURBINE
OBJET, EN PARTICULIER UNE PALE DE ROTOR POUR UNE ÉOLIENNE

(43) Date of publication of application: 21.12.2016
(73) Proprietor: Siemens Aktiengesellschaft, 80333 München (DE)
(72) Inventor: Mikkelsen, Jacob, 9000 Aalborg SV (DK)

(56) References cited:
- WO-A1-2012/110041
- CN-U- 202 215 428
- US-B1- 8 025 480

## Description

The invention relates to an object, in particular a rotor blade for a wind turbine, with a composite construction comprising a plurality of layers of fabric arranged in a matrix material.

The use of composite constructions comprising a plurality of layers of fabric arranged in a matrix material is well known in the prior art. For example rotor blades for wind turbines are built in such a manner. The fabric is arranged in a cavity according to the desired shape of the rotor blade. A vacuum is applied and subsequently the matrix material is filled into the cavity. Afterwards the rotor blade can be cured, for example by time expired heating.

Disadvantageously it is not possible or it is difficult to evaluate the overlap of the fabric material or to count the single layers of fabric by visual inspection, as the fabric and the matrix material used are commonly transparent to visible light. An optical monitoring of the rotor blades is therefore often impossible.

To make sure, that the correct amount of layers is applied or that the layers are applied in the correct shape, respectively, the object has to be cut open. A 100% testing of the produced objects is therefore not possible, as there is no non-destructive examination method available.

WO 2012/110041 A1 discloses a system and a method for detecting damage to a wind turbine blade, that uses one or more fluorescent optical fibres comprising a fluorescent material having an excitation wavelength that is selected such that the material fluoresces upon exposure to ambient radiation. It is therefore possible to ascertain a damage to the wind turbine blade as an optical detector detects radiation emitted by the fluorescent optical fibres, as they emit radiation only when cracks or damages, e. g. based on erosion, are present on the said wind turbine blade.

It is therefore an objective of the present invention to provide an object as initially mentioned in such a way that a non-destructive examination of the object is possible.

This objective is achieved by an object as initially mentioned, whereby several of the plurality of layers are made of fabric comprising at least one portion being equipped with luminescent material.

The inventive object is composed of a composite construction comprising a plurality of layers of fabric arranged in a matrix material, whereby luminescent material is used to separate at least two layers from each other or to locate the position of one layer which has luminescent material attached thereto or which comprises luminescent material inside the object or inside the matrix material. The present invention pursues the idea, that by using luminescent material, it is possible to count the number of layers in the matrix material, as the fabric and the matrix material is as well transparent to visible light and to light that is able to stimulate the luminescent material. Therefore a light source is used, that is capable of stimulating the luminescent material. When the object is exposed to said light source only the stimulated luminescent material emits radiation and the portions of luminescent material are therefore visible and can be counted, while the rest of the object remains transparent.

According to an embodiment of the invention each layer of fabric comprises at least one portion comprising luminescent material or having luminescent material attached thereto. In this way the layers of fabric can be counted easily as each layer comprises a portion comprising luminescent material or having luminescent material attached thereto. As the object is exposed to light with adequate wavelength, that is capable to stimulate the luminescent material, the portion of each layer of fabric is made visible. Therefore the single lit up portions of every layer can be counted by visual inspection. Consequently the object does not have to be cut open and can be examined in a non-destructive way.

According to a further variant of the invention at least one layer comprises at least two portions comprising luminescent material or having luminescent material attached thereto, whereby the portions are arranged in a defined distance over the length of the object. By either applying more than one portion or the at least one layer comprising more than one portion of luminescent material, it is possible to count the layers at different positions along the object. Especially in regard to a rotor blade for a wind turbine the shape and the amount of layers vary with the length of the object. It is therefore preferred to count the amount of those layers of fabric not only at one single position but at more positions for example evenly distributed over the length of the object. It is self-evident, that the positions where the amount of layers of fabric is evaluated can be chosen arbitrarily or for example as defined by the user. Self-evidently it is also possible to define the size and the position of the portions with luminescent material across the object arbitrarily, too. Preferably the portions are arranged close to the edge of the layer in any arbitrary distance, for example 2cm or more, from the edge of the layer and can be arranged at all positions over the width or the length of the layer of fabric. Alternatively the luminescent material, in particular the fluorescent yarn, is preferably as wide as the fabric material or the fabric roll, respectively. It is again ensured, that the orientation of the luminescent material applied to each layer of fabric can be aligned in every arbitrary direction. It is in particular possible to apply the luminescent material alongside the length or the width of each layer of fabric.

Alternatively it is possible, that the luminescent material is a fluorescent or a phosphorescent or a scintillation material. The material used can be chosen user-defined and in general every material is usable that can be stimulated by an adequate light source in such a way, that luminescent material is made visible preferably with light comprising a wavelength outlying the visual spectrum. The term luminescent material refers generally to every material that is stimulated by light of an adequate wavelength. As the object in particular a rotor blade for a wind turbine is coated or painted or the surface of the object is processed in any other way, the luminescent material inside the object is not visible in the completed object.

In an embodiment of the present invention the material used is yarn or thread or fibre or texture, in particular fluorescent polyester yarn. The material can therefore be applied in a fine line or any user-defined pattern on each layer of fabric. In particular polyester yarn can be used. Advantageously the polyester yarn is used extensively for example in apparel and home furnishings. It is also well known, that the yarn or thread can be fabricated to be already luminescent. Therefore the luminescent material in form of yarn or thread is widely available and inexpensive.

In a variant of the present invention the luminescent material is sewn or stitched or woven into at least one layer of fabric. This variant can simplify the production of the inventive object further, as the layers of fabric are each sewn, stitched or woven together in a production process, so that these layers consist of fibres sewn, stitched or woven together. Conveniently only one sewing or stitching has to be applied or exchanged with one luminescent material, for example luminescent yarn or thread. It is therefore possible, to replace for example a single sewing or stitching per layer with yarn or thread of luminescent material. It is further possible to replace the stitching in a defined cycle, e. g. every one hundred, with luminescent material. Advantageously fabric in that way comprises luminescent material or has luminescent material attached thereto with low production effort. Alternatively the luminescent material can be printed onto the layer of fabric. It is for example possible to print a screen print or any other form or texture onto the layer that consists or is made of luminescent material. Hence nearly any pattern or form is applicable to the layers of fabric.

As already mentioned the object is preferably composed of a plurality of layers of fabric and of matrix material that are transparent for visible light. Therefore for example glass-fibre reinforced plastic can be used with for example polyester resin as matrix material. Since this is the combination of material, that modern rotor blades for wind turbines are made of, the present invention enables a visual inspection, that is non-destructive to ensure, that the correct overlap and/or the correct number of layers of fabric is applied in each object.

Aside the invention relates to a method of producing an object, in particular a rotor blade for a wind turbine with a composite construction comprising a plurality of layers of fabric being arranged in a matrix material, whereby several of the plurality of layers being made of fabric comprising at least one portion being equipped with the luminescent material. For producing the inventive object at least one portion of at least one of the layers of fabric is provided with luminescent material or luminescent material is attached thereto. Therefore it is possible to make the luminescent material visible, when the object is exposed to a light source with adequate wavelength, capable of stimulating the luminescent material.

In an embodiment of the inventive method at least one portion of each layer of the object is provided with luminescent material or luminescent material being attached thereto. By pursuing this way every single layer can be made visible when the object is exposed to an adequate light source. This makes the counting of the single layers of fabric simple.

In a further variant of the inventive method at least two portions of at least one layer are provided with luminescent material or luminescent material being attached thereto, whereby the portions are being arranged in a defined distance over the length of the object. By such an arrangement of the luminescent material it is made possible, that the amount of layers, respectively the overlap of layers of fabric, can be examined over the length of the object in various positions. Self-evidently the positions, where luminescent material is attached or where luminescent material is provided to the at least two portions of the layers is user-defined and arbitrary.

Preferably the material is sewn or stitched or woven into the layer of fabric. By sewing or stitching or weaving the luminescent material into the layer of fabric the luminescent material can already be arranged on the layer in the production of the fabric material. Therefore the luminescent material can be provided or attached to the fabric material in a simple way.

Besides a method for analyzing an object, in particular a rotor blade for wind turbine, with a composite construction comprising a plurality of layers of fabric is suggested, whereby several of the plurality of layers are made of fabric comprising at least one portion being equipped with luminescent material and the object being exposed to light with adequate wavelength being able to stimulate the luminescent material.

In this way it is possible to make the luminescent material visible in the light of the adequate light source. By use of a light source with adequate wavelength, in particular UV-light (ultra violet light) it is possible to stimulate the luminescent material, so that it glows or lights itself. The beholder can therefore easily count the single layers of fabric as the portions with luminescent material are lit up as the rest of the object stays transparent. Besides UV-light every other light source is usable, as long as it emits light of a wavelength that is able to stimulate the luminescent material.

In a variant of the method for analysing the object it is possible to expose the object to a flashing light source or a continuous light source.

Preferably at least one picture is recorded via a camera when the object is exposed to light with adequate wavelength. With the picture recorded when the object is exposed to said light source an image of the object with lit up luminescent material can be recorded. Therefore, the object can be saved and evaluated.

In a further variant of the method for analyzing the object it is possible, that the amount of layers is evaluated via pattern recognition. In particular an image of the camera as described before is taken, when the object is exposed to light with adequate wavelength. Via pattern recognition, for example by a pattern recognition software the single portions of each layer can be evaluated and therefore the amount of layers or the overlap of layers of fabric can be evaluated. Self-evidently every feature of the inventive object, the inventive method for producing the object and the method for analyzing the object can be applied to each other arbitrarily.

In the following, the invention is described in detail, whereby reference is made to the drawings. The drawings are principal drawings and show:
- Fig. 1: a perspective view of an inventive object in visible light; and
- Fig. 2: the perspective view of Fig. 1 in the light of a light source;
- Fig. 3: a cross sectional view of the inventive object of Fig. 2; and
- Fig. 4: a perspective view of an inventive object in the light of a light source according to an-other embodiment of the invention.

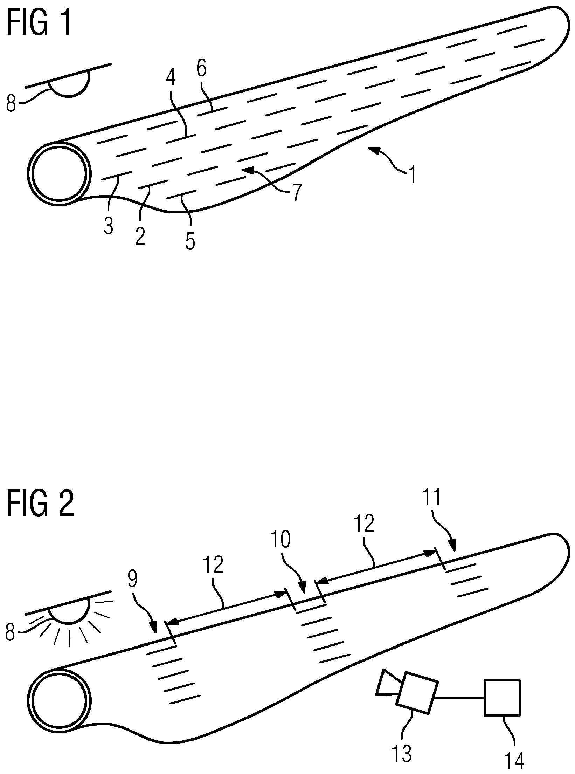

Fig. 1 shows a principal drawing of an object 1. The object 1 is a rotor blade for a wind turbine with a composite construction comprising a plurality of layers 2 to 6 of fabric, for example glass fabric. The layers 2 to 6 are arranged in a matrix material 7, for example polyester resin. As the layers 2 to 6 of fabric as well as the matrix material 7 is transparent to visible light. It is not possible to count the layers 2 to 6 by visual inspection. Each of the layers 2 to 6 has a portion 9 comprising luminescent material, in particular fluorescent material being attached thereto. In this embodiment the luminescent material is luminescent polyester yarn that is stitched into the layers 2 to 6 of fabric at the portions 9, 10, 11. The luminescent material is not visible in Fig. 1 since, as described before, the object 1 is exposed to visible light. The portions 9 of the respective layers 2 to 6 are arranged in the same position along the object 1, so that evaluation of the amount of layers 2 to 6 can be done effectively.

Fig. 2 shows a perspective view of the object 1 of Fig. 1 as it is exposed to UV-light emitted by a light source 8 that emits light with a wavelength of for example 360 nm. The light source 8 emits the radiation uniformly over the object 1 in particular in the region, where the portions 9, 10 and 11 of luminescent material are applied on the layers 2 to 6 of fabric. The portions 9, 10 and 11 are distributed in distances 12 over the length of the object 1.

As seen in Fig. 2 the portions 9, 10, 11 are lit up and visible in the light of the light source 8. It is also visible, that the layers 2 to 6 comprise each a portion 9, the layers 2 to 6 comprise a portion 10 in a defined distance 12 and the layers 3, 4, 6 comprise a third portion 11 also arranged in the distance 12 between the second portion 10 and the third portion 11. Self-evidently the amount of layer 2 to 6 and the amount of portions 9, 10, 11 are only exemplary.

The object 1 in particular the region of the portions 9 to 11 is recorded via a camera 13, that is sensitive to the light emitted by the luminescent material as it is stimulated by the light emitted by light source 8. For example the light emitted by the luminescent material of the portions 9 to 11 is in the blue or yellow part of the visible spectrum. Self-evidently every other colour can be used. It is also possible to use luminescent material that does not emit radiation in the visible spectrum, but for example, in the infrared spectrum. The camera 13 has to be adapted to record the light emitted by the portions 9 to 11 of luminescent material. The camera 13 is further connected to a central processor unit 14. The central processor unit 14 is able to run a pattern recognition software, that can evaluate the pictures, that are recorded via the camera 13. Therefore the amount of layers 2 to 6, respectively the portions 9, 10, 11 can be evaluated via pattern recognition in the picture recorded by the camera 13.

In that way a non-destructive examination method for objects that are transparent in visible light and comprise a composite construction comprising a plurality of layers of fabric and matrix material that is also transparent in visible light is made possible. The object 1 does not have to be cut open to count the layers 2 to 6.

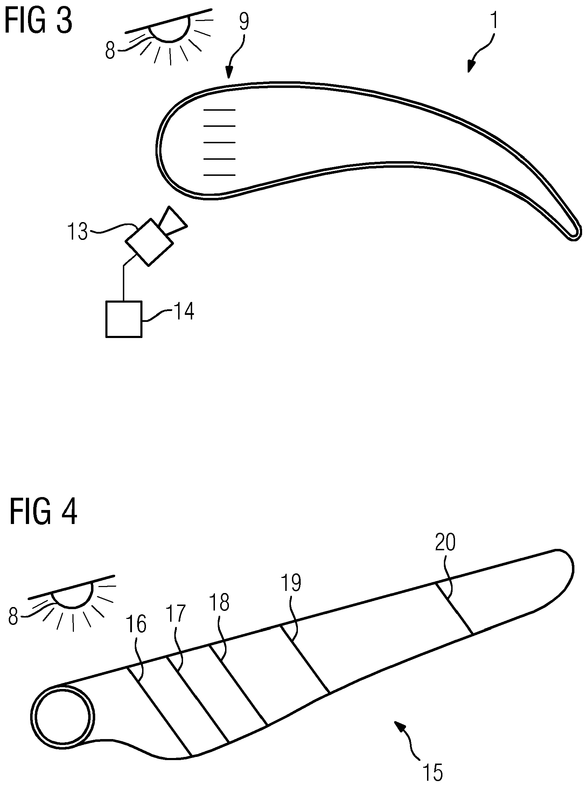

Fig. 3 shows a cross sectional view of the inventive object of Fig. 2. The camera 13 is positioned under an angle, so that it can record the portions 9 that are stitched into the layers 2 to 6 of fabric. In Fig. 3 the portions 10 and 11 are covered by the portions 9. Self-evidently the angle under which the camera 13 records the portions 9 to 11 is arbitrary and preferably adapted to the individual object 1 and test setup.

Fig. 4 shows a principle drawing of an object 15. The object 15 is also a rotor blade for a wind turbine and is built up according to the object 1 described above. In contrast to object 1 object 15 comprises the portions 16 to 20 of luminescent material attached to each layer 2 to 6 of the object 15. Of course each layer of fabric 2 to 6 of the object 15 comprises a portion 16 to 20 of luminescent material. Fig. 4 shows a perspective view of the object 15, where the single attachments of each layer 2 to 6 of fabric are covered by the attachment in the first layer. So only the first portion of luminescent material 16 to 20 is visible in fig. 4. Fig. 4 shows therefore, that the portions 16 to 20 of luminescent material can be arranged in every arbitrary way. According to fig. 4 the portions 16 to 20 are arranged in arbitrary distances more or less alongside the width the object 15. Self-evidently every detail and feature described above with reference to object 1 also applies to object 15 as it only differs from the described object 1 above in the orientation of the portions 16 to 20 of the luminescent material.

Although the present invention has been described in detail with reference to the preferred embodiment, the present invention is not limited by the disclosed examples from which the skilled person is able to derive other variations without departing from the scope of the invention.

## Claims

1. Object (1), in particular a rotor blade for a wind turbine, with a composite construction comprising a plurality of layers (2-6) of fabric arranged in a matrix material (7), **characterised in that** several of the plurality of layers (2-6) are made of fabric comprising at least one portion (9-11, 16-20) being equipped with luminescent material.

2. Object according to claim 1,
**characterised in that** each layer (2-6) comprises at least one portion (9-11, 16-20) comprising luminescent material or having luminescent material attached thereto.

3. Object according to claim 1 or 2,
**characterised in that** at least one layer (2-6) comprises at least two portions (9-11, 16-20) comprising luminescent material or having luminescent material attached thereto, whereby the portions (9-11, 16-20) are arranged in a defined distance (12) over the length of the object (1).

4. Object according to one of the preceding claims,
**characterised in that** the luminescent material is fluorescent or phosphorescent material.

5. Object according to one of the preceding claims,
**characterised in that** the luminescent material is yarn or thread or fibre or texture, in particular luminescent polyester yarn.

6. Object according to claim 5,
**characterised in that** the luminescent material is sewn or stitched or woven into or glued onto the layer (2-6) of fabric.

7. Object according to one of the claims 1 to 5, **characterised in that** the luminescent material is printed onto the layer (2-6) of fabric.

8. Object according to one of the preceding claims,
**characterised in that** the fabric material and the matrix material (7) is transparent for visible light.

9. Object according to one of the preceding claims,
**characterised in that** the fabric material is glass fabric.

10. Method of producing an object (1) according to one of the preceding claims, in particular a rotor blade for a wind turbine, with a composite construction comprising a plurality of layers (2-6) of fabric being arranged in a matrix material (7), **characterised in that** several of the plurality of layers (2-6) are made of fabric comprising at least one portion (9-11, 16-20) being equipped with luminescent material.

11. Method according to claim 10,
**characterised in that** at least one portion (9-11, 16-20) of each layer (2-6) of the object being provided with luminescent material or luminescent material being attached thereto.

12. Method according to claim 10 or 11,
**characterised in that** at least two portions (9-11, 16-20) of at least one layer being provided with luminescent material or luminescent material being attached thereto, whereby the portions(9-11, 16-20) being arranged in a defined distance (12) over the length of the object (1).

13. Method according to one of claims 10 to 12,
**characterised in that** the luminescent material being sewn or stitched or woven into or glued onto the layer (2-6) of fabric.

## Patentansprüche

1. Gegenstand (1), insbesondere Rotorblatt für eine Windenergieanlage, mit einer Verbundwerkstoffkonstruktion, die mehrere in einem Matrixmaterial (7) angeordnete Schichten (2-6) aus Gewebe umfasst, **dadurch gekennzeichnet, dass** einige der mehreren Schichten (2-6) aus Gewebe mit mindestens einem mit leuchtendem Material ausgestatteten Abschnitt (9-11, 16-20) hergestellt sind.

2. Gegenstand nach Anspruch 1,
**dadurch gekennzeichnet, dass** jede Schicht (2-6) mindestens einen Abschnitt (9-11, 16-20) mit leuchtendem Material oder daran angebrachtem leuchtendem Material umfasst.

3. Gegenstand nach Anspruch 1 oder 2,
**dadurch gekennzeichnet, dass** mindestens eine Schicht (2-6) mindestens zwei Abschnitte (9-11, 16-20) mit leuchtendem Material oder daran angebrachtem leuchtendem Material umfasst, wobei die Abschnitte (9-11, 16-20) in einem vorgegebenen Abstand (12) über die Länge des Gegenstandes (1) hinweg angeordnet sind.

4. Gegenstand nach einem der vorhergehenden Ansprüche,
**dadurch gekennzeichnet, dass** es sich bei dem leuchtenden Material um fluoreszierendes oder phosphoreszierendes Material handelt.

5. Gegenstand nach einem der vorhergehenden Ansprüche,
**dadurch gekennzeichnet, dass** es sich bei dem leuchtenden Material um Garn oder Faden oder Faser oder Textur, insbesondere leuchtendes Polyestergarn, handelt.

6. Gegenstand nach Anspruch 5,
**dadurch gekennzeichnet, dass** das leuchtende Material in die Schicht (2-6) aus Gewebe eingenäht oder eingeheftet oder eingewoben oder auf sie aufgeklebt ist.

7. Gegenstand nach einem der Ansprüche 1 bis 5,
**dadurch gekennzeichnet, dass** das leuchtende Material auf die Schicht (2-6) aus Gewebe aufgedruckt ist.

8. Gegenstand nach einem der vorhergehenden Ansprüche,
**dadurch gekennzeichnet, dass** das Gewebematerial und das Matrixmaterial (7) für sichtbares Licht durchlässig sind.

9. Gegenstand nach einem der vorhergehenden Ansprüche,
**dadurch gekennzeichnet, dass** es sich bei dem Gewebematerial um Glasfasergewebe handelt.

10. Verfahren zum Herstellen eines Gegenstands (1) nach einem der vorhergehenden Ansprüche, insbesondere eines Rotorblatts für eine Windenergieanlage, mit einer Verbundwerkstoffkonstruktion, die mehrere in einem Matrixmaterial (7) angeordnete Schichten (2-6) aus Gewebe umfasst, **dadurch gekennzeichnet, dass** einige der mehreren Schichten (2-6) aus Gewebe mit mindestens einem mit leuchtendem Material ausgestatteten Abschnitt (9-11, 16-20) hergestellt werden.

11. Verfahren nach Anspruch 10,
**dadurch gekennzeichnet, dass** mindestens ein Abschnitt (9-11, 16-20) jeder Schicht (2-6) des Gegenstands mit leuchtendem Material versehen oder leuchtendes Material daran angebracht wird.

12. Verfahren nach Anspruch 10 oder 11,
**dadurch gekennzeichnet, dass** mindestens zwei Abschnitte (9-11, 16-20) mindestens einer Schicht mit leuchtendem Material versehen werden oder leuchtendes Material daran angebracht wird, wobei die Abschnitte (9-11, 16-20) in einem vorgegebenen Abstand (12) über die Länge des Gegenstandes (1) hinweg angeordnet werden.

13. Verfahren nach einem der Ansprüche 10 bis 12,
**dadurch gekennzeichnet, dass** das leuchtende Material in die Schicht (2-6) aus Gewebe eingenäht oder eingeheftet oder eingewoben oder auf sie aufgeklebt wird.

## Revendications

1. Objet (1), en particulier une pale de rotor pour une éolienne, avec une construction composite comprenant une pluralité de couches (2-6) de toile agencées dans un matériau matrice (7), **caractérisé en ce que** plusieurs de la pluralité de couches (2-6) sont constituées d'une toile comprenant au moins une partie (9-11, 16-20) étant équipée d'un matériau luminescent.

2. Objet selon la revendication 1,
**caractérisé en ce que** chaque couche (2-6) comprend au moins une partie (9-11, 16-20) comprenant un matériau luminescent ou ayant un matériau luminescent fixé à celle-ci.

3. Objet selon la revendication 1 ou 2,
**caractérisé en ce qu'**au moins une couche (2-6) comprend au moins deux parties (9-11, 16-20) comprenant un matériau luminescent ou ayant un matériau luminescent fixé à celles-ci, dans lequel les parties (9-11, 16-20) sont agencées à une distance définie (12) sur la longueur de l'objet (1).

4. Objet selon l'une des revendications précédentes,
**caractérisé en ce que** le matériau luminescent est un matériau fluorescent ou phosphorescent.

5. Objet selon l'une des revendications précédentes,
**caractérisé en ce que** le matériau luminescent est un fil ou un brin de fil ou une fibre ou une texture, en particulier un fil de polyester luminescent.

6. Objet selon la revendication 5,
**caractérisé en ce que** le matériau luminescent est cousu ou piqué ou tissé dans ou collé sur la couche (2-6) de toile.

7. Objet selon l'une des revendications 1 à 5,
**caractérisé en ce que** le matériau luminescent est imprimé sur la couche (2-6) de toile.

8. Objet selon l'une des revendications précédentes,
**caractérisé en ce que** le matériau de toile et le matériau matrice (7) sont transparents pour la lumière visible.

9. Objet selon l'une des revendications précédentes,
**caractérisé en ce que** le matériau de toile est une toile de verre.

10. Procédé de production d'un objet (1) selon l'une des revendications précédentes, en particulier une pale de rotor pour une éolienne, avec une construction composite comprenant une pluralité de couches (2-6) de toile étant agencées dans un matériau matrice (7), **caractérisé en ce que** plusieurs de la pluralité de couches (2-6) sont constituées d'une toile comprenant au moins une partie (9-11, 16-20) étant équipée d'un matériau luminescent.

11. Procédé selon la revendication 10,
**caractérisé en ce qu'**au moins une partie (9-11, 16-20) de chaque couche (2-6) de l'objet étant dotée d'un matériau luminescent ou un matériau luminescent étant fixé à celle-ci.

12. Procédé selon la revendication 10 ou 11,
**caractérisé en ce qu'**au moins deux parties (9-11, 16-20) d'au moins une couche étant dotées d'un matériau luminescent ou un matériau luminescent étant fixé à celles-ci, dans lequel les parties (9-11, 16-20) étant agencées à une distance définie (12) sur la longueur de l'objet (1).

13. Procédé selon l'une des revendications 10 à 12,
**caractérisé en ce que** le matériau luminescent étant cousu ou piqué ou tissé dans ou collé sur la couche (2-6) de toile.
